# EUROPEAN PATENT APPLICATION

(11) **EP 1 972 811 A2**
(43) Date of publication of application: **24.09.2008**
(21) Application number: 08152879.6
(22) Date of filing: 18.03.2008
(51) Int. Cl.: F16D 9/06, F16H 55/36

(54) **Power transmission device of a compressor**

(30) Priority: 19.03.2007 JP 2007070112
(71) Applicant: Kabushiki Kaisha Toyota Jidoshokki, Kariya-shi, Aichi 448-8671 (JP)
(72) Inventor: Enokijima, Fuminobu, Kariya-shi Aichi 448-8671 (JP); Yokomachi, Naoya, Kariya-shi Aichi 448-8671 (JP); Nakamura, Norihiko, Kariya-shi Aichi 448-8671 (JP); Fukanuma, Tetsuhiko, Kariya-shi Aichi 448-8671 (JP)
(74) Representative: TBK-Patent

(57) **Abstract**

A power transmission device of a compressor includes a pulley, a hub, a cylinder, and a spacer. The compressor has a casing and a rotary shaft rotatably supported by the casing and having an external thread portion. The pulley is rotatably mounted on the casing of the compressor. The hub is connected to the pulley for rotation therewith. The cylinder is disposed between the hub and the rotary shaft. The spacer is disposed on the rotary shaft. The cylinder has a contacting surface for contacting a seating surface of the spacer. The cylinder has an internal thread portion at the inner periphery thereof. The internal thread portion of the cylinder is engaged with the external thread portion of the rotary shaft. The cylinder has a spline portion at the outer periphery thereof. The spline portion of the cylinder is coupled to a spline portion of the hub.

## Description

### BACKGROUND OF THE INVENTION

The present invention relates to a power transmission device for transmitting power between a rotary shaft and a rotor connected to the rotary shaft. More particularly, the present invention relates to a power transmission device of a compressor for a vehicle air conditioner driven by an external drive source such as an engine through an engine belt.

In Japanese Patent Application Publication No. 2005-140280, a power transmission device has a drive shaft and a cylindrical adapter. The adapter is disposed around the drive shaft. An end portion of the drive shaft has an externally threaded portion at the outer periphery of the drive shaft. The adapter has an internally threaded portion formed at the inner periphery thereof. The internally threaded portion of the adapter is engaged with the externally threaded portion of the drive shaft. The adapter has an externally threaded portion at the outer periphery thereof. The externally threaded portion of the adapter is engaged with an internally threaded portion of a hub. The drive shaft in the compressor has a medium-diameter portion which is formed adjacent to the end portion of the drive shaft. The diameter of the medium-diameter portion is larger than that of the end portion. A step portion is formed between the end portion and the medium-diameter portion. A screw seat member is press-fitted onto the drive shaft at the position of the step portion. The screw seat member includes a screw seat surface.

The adapter is screwed onto the drive shaft and an end face of the adapter is pressed against the screw seat surface of the screw seat member. In such a way the adapter is fastened to the drive shaft. The hub is screwed onto the adapter and an end face of the hub is pressed against the screw seat surface of the screw seat member. In such a way the hub is fastened to the adapter. A lip-seal type shaft seal device is arranged between the drive shaft and a housing of the compressor. The seal device defines outside of the housing and inside of the housing, and seals off from the outside of the housing and prevents leakage of refrigerant including lubricating oil. The diameter of the medium-diameter portion where the shaft seal device is in slide contact is smaller than that of a part of the drive shaft on the inner side of the seal device. Accordingly, the peripheral speed is reduced at the slide-contacting portion of the medium-diameter portion.

The process for assembling the above-constructed power transmission device includes a first process and a second process. In the first process the adapter is fastened to the drive shaft and in the second process the hub is fastened to the adapter. A whirl-stopper protrudes from the end face of the end portion of the drive shaft. The whirl-stopper is to be held by a chuck of an assembling machine in the first process of fastening the adapter to the drive shaft by screwing. Another whirl-stopper protrudes from an end face of the adapter opposite to the end face thereof adjacent to the screw seat member. The whirl-stopper of the adapter is to be held by a chuck and the like during the first and second processes.

The adapter is interposed between the drive shaft and the hub so as to be fastened to each other, thereby fastening torque for fastening the adapter and the drive shaft is reduced. Accordingly, load acting on the drive shaft is reduced during the first process of fastening the adapter to the drive shaft by screwing, and the breakage of the whirl-stopper is prevented. Further, the diameter of the adapter is set to be increased, and the breakage of the whirl-stopper of the adapter is prevented during the first and the second processes, accordingly.

In the above-described power transmission device, the diameter of the whirl-stopper of the adapter is larger than the diameter of the whirl-stopper of the drive shaft. However, the diameter of the whirl-stopper of the adapter is set smaller than the diameter of the externally threaded portion of the adapter. The power transmission device with such a structure is not strong mechanically. When the fastening torque is excessively high during the second process for fastening the hub to the adapter by screwing, the load acting on the adapter is increased, and the whirl-stopper of the adapter may be broken. Further, the whirl-stopper is inevitably formed at the end face of the adapter, and the size of the power transmission device is increased and requires an extra space, accordingly.

The present invention is directed to a power transmission device of a compressor in which breakage during assembling process is prevented while decreasing the size thereof.

### SUMMARY OF THE INVENTION

In accordance with an aspect of the present invention, a power transmission device of a compressor for transmitting torque to the compressor includes a pulley, a hub, a cylinder, and a spacer. The compressor has a casing and a rotary shaft rotatably supported by the casing and having an external thread portion. The pulley is rotatably mounted on the casing of the compressor. The hub is connected to the pulley for rotation therewith. The cylinder is disposed between the hub and the rotary shaft. The spacer is disposed on the rotary shaft. The cylinder has a contacting surface for contacting a seating surface of the spacer. The cylinder has an internal thread portion at the inner periphery thereof. The internal thread portion of the cylinder is engaged with the external thread portion of the rotary shaft. The cylinder has a spline portion at the outer periphery thereof. The hub has a spline portion at the inner periphery thereof. The spline portion of the cylinder is coupled to the spline portion of the hub.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a longitudinal cross-sectional view showing a power transmission device according to a first preferred embodiment of the present invention;
Fig. 2 is a front elevational view which is viewed from the front side or the left side of Fig.1;
Fig. 3 is an enlarged longitudinal cross-sectional view showing the power transmission device of the compressor according to the first preferred embodiment of the present invention;
Fig. 4 is an illustrative view showing the transmission of torque and various radiuses of rotation of the power transmission device according to the first preferred embodiment of the present invention;
Fig. 5 is an enlarged longitudinal cross-sectional view showing a power transmission device according to a second preferred embodiment of the present invention; and
Fig. 6 is an enlarged longitudinal cross-sectional view showing a power transmission device according to a third preferred embodiment of the present invention.

### DETAILED DESCRIPTION OF THE PREFERRED EMBODIMENTS

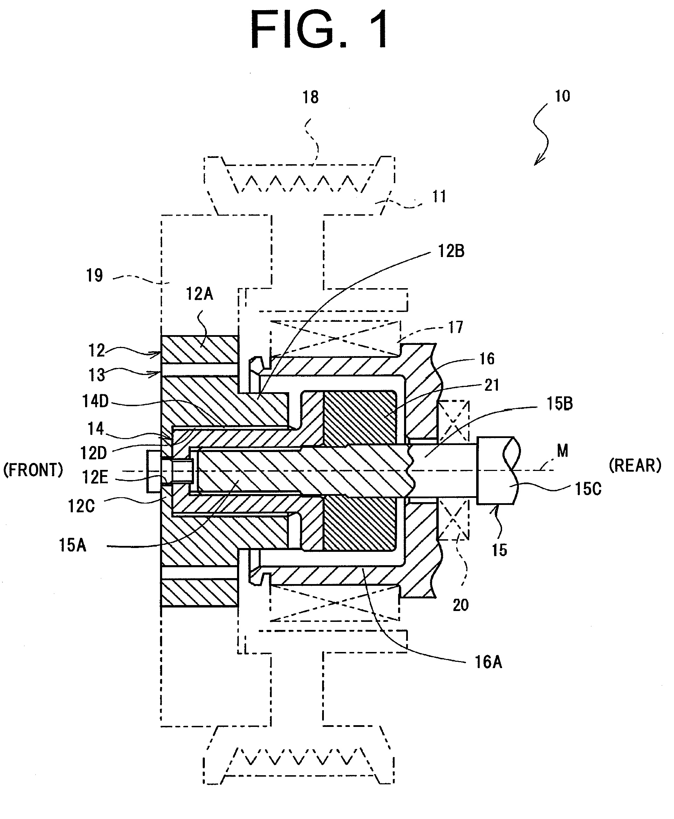

The following will describe a power transmission device of a compressor according to a first embodiment of the present invention with reference to Fig. 1 through Fig. 4. As shown in Fig. 1, the power transmission device of the compressor of the first preferred embodiment is generally designated by reference numeral 10. The power transmission device 10 includes a pulley 11, a hub 12, and a cylinder 14. The power transmission device 10 is used for transmitting torque from the pulley 11 to a rotary shaft 15 of the compressor. The pulley 11 is rotatably mounted on a casing 16 of the compressor and driven by an engine and the like. The hub 12 is connected to the pulley 11 for rotation therewith. The cylinder 14 is disposed between the hub 12 and the rotary shaft 15. A cylindrical boss 16A is formed at one end of the casing 16. The pulley 11 is rotatably mounted on the outside of the cylindrical boss 16A through a bearing 17. A belt 18 is wound around the pulley 11. The belt 18 is connected to an external source such as an engine or a motor (not shown), so that the pulley 11 is rotated by way of the belt 18.

The hub 12 is made of a ferrous material and formed in a stepped cylindrical shape. The hub 12 includes a large-diameter portion 12A and a small-diameter portion 12B serially. The hub 12 also includes a joint portion 12C. The joint portion 12C is connected to an axial end portion of the large-diameter portion 12A. In Fig. 1, the left side of the drawing corresponds to the front side of the power transmission device 10, and the right side to the rear side of the power transmission device 10. The hub 12 has the joint portion 12C at the front side. An axially end portion of the hub 12 adjacent to the small-diameter portion 12B is opened at the rear side. An inner periphery of the hub 12 is formed with a spline portion 12D. Corresponding to the spline portion 12D, a spline portion 14D is formed at an outer periphery of the cylinder 14. The spline portion 12D of the hub 12 is fitted to the spline portion 14D of the cylinder 14 by spline coupling. A power shutoff member 13 which serves as a torque limiter is disposed at the large-diameter portion 12A. A center hole 12E is formed at the center of the joint portion 12C. The pulley 11 is connected to the hub 12 through a connecting member 19 thereby to transmit torque from the pulley 11 to the hub 12.

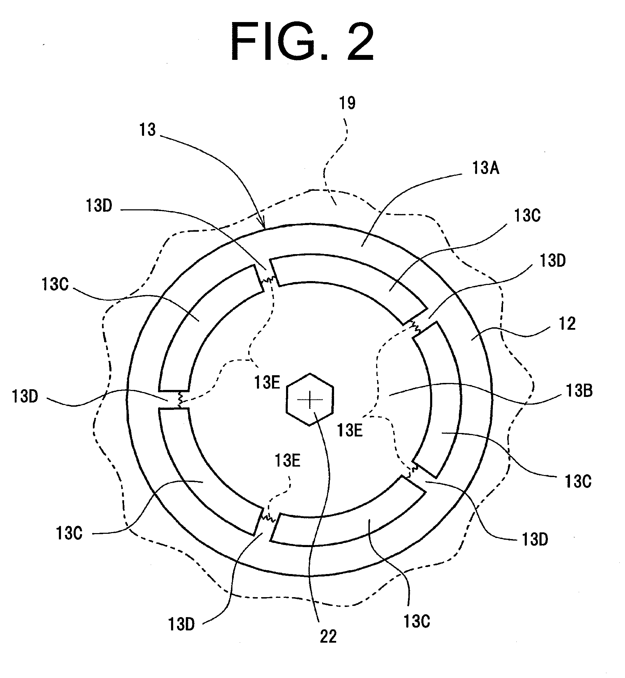

In Figs. 1 and 2, the power shutoff member 13 which serves as a torque limiter is disposed at the large-diameter portion 12A in the hub 12. The power shutoff member 13 includes an outer-peripheral portion 13A, an inner-peripheral portion 13B, plural holes 13C, and plural bridge portions 13D. The inner-peripheral portion 13B is disposed at the inner-peripheral side of the outer-peripheral portion 13A. The holes 13C are formed with an arc-shape in the circumferential direction. The holes 13C are arranged equiangularly between the outer-peripheral portion 13A and the inner-peripheral portion 13B. The bridge portions 13D are formed between the respective two adjacent holes 13C so as to connect the outer-peripheral portion 13A and the inner-peripheral portion 13B. The bridge portions 13D serve as breakable portions 13E which are set to be broken when excessive torque is applied to the power shutoff member 13. The breakable portions 13E are indicated by dot lines in Fig. 2.

The rotary shaft 15 is made of a ferrous material and rotatably supported in the casing 16. As shown in Fig. 1, the rotary shaft 15 includes a small-diameter portion 15A, a medium-diameter portion 15B and a large-diameter portion 15C serially in this order from the front of the power transmission device 10. A lip-seal type shaft seal device 20 is disposed between the casing 16 and the rotary shaft 15. The shaft seal device 20 prevents refrigerant gas and oil from leaking out of the compressor and maintains the airtightness of the compressor. In operation of the compressor, the shaft seal device 20 is kept in slide contact with the medium-diameter portion 15B of the rotary shaft 15. The peripheral speed of the medium-diameter portion 15B in sliding contact with the shaft seal device 20 is lower than the peripheral speed of the large-diameter portion 15C. Accordingly, the heat generation between the medium-diameter portion 15B and the shaft seal device 20 is reduced and durability of the shaft seal device 20 is improved.

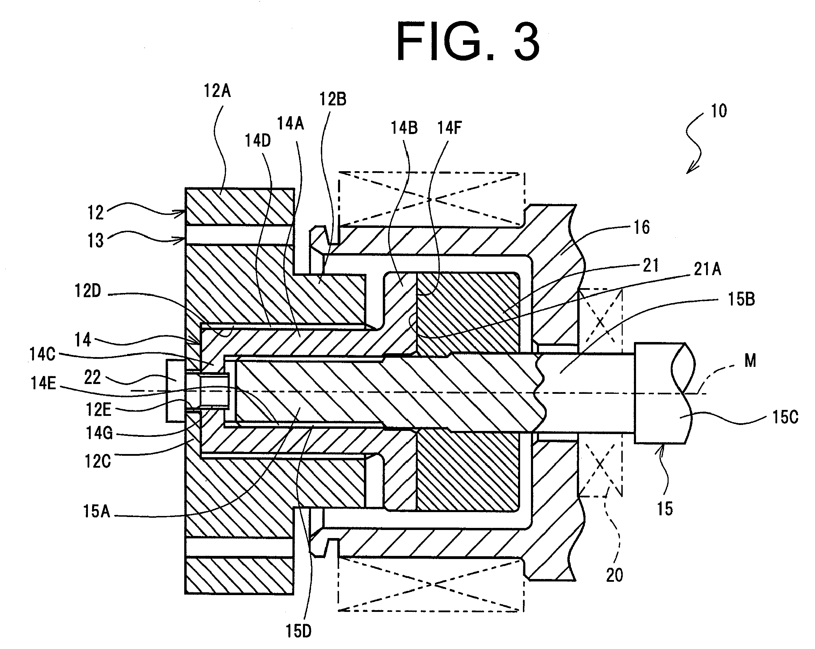

As shown in Fig. 3, the small-diameter portion 15A of the rotary shaft 15 is formed at the outer periphery thereof with an external thread portion 15D. A cylindrical spacer 21 as a screw seat member and a part of the power transmission device is press-fitted on the medium-diameter portion 15B at a boundary region between the small-diameter portion 15A and the medium-diameter portion 15B. The spacer 21 forms a radially-expanded portion of the rotary shaft 15. The spacer 21 is pressed against a step between the small-diameter portion 15A and the medium-diameter portion 15B so as to be fixedly positioned. The spacer 21 has a shaft-side seating surface 21A at the front end face thereof. The shaft-side seating surface 21A is formed with an annular surface extending perpendicular to the axis M of the rotary shaft 15. The shaft-side seating surface 21A is in contact with a cylinder-side contacting surface 14F of the cylinder 14, which will be described later.

The cylinder 14 with a cylindrical shape is disposed between the hub 12 and the rotary shaft 15. The cylinder 14 is made of ferrous material. The cylinder 14 includes a cylindrical portion 14A, a flange 14B, and a cap 14C. The flange 14B is formed adjacent to the rear end of the cylindrical portion 14A and expanded in the radial direction so as to enlarge the diameter of the cylinder 14. The cap 14C is formed adjacent to the front end of the cylindrical portion 14A. An internal thread portion 14E is formed at the inner periphery of the cylindrical portion 14A so as to be screwed onto the external thread portion 15D of the rotary shaft 15. A spline portion 14D is formed at the outer periphery of the cylindrical portion 14A, and is fitted to the spline portion 12D of the hub 12 by spline coupling. The cylinder-side contacting surface 14F is formed at the rear end surface of the flange 14B so as to face axially and contact the shaft-side seating surface 21A of the spacer 21. The cap 14C is disposed so as to face the front end portion of the rotary shaft 15 with a predetermined clearance. A thread hole 14G is formed at the center of the cap 14C.

The internal thread portion 14E of the cylinder 14 is screwed onto the external thread portion 15D of the rotary shaft 15. By screwing the cylinder 14, the cylinder 14 is axially moved rearward along the rotary shaft 15 until the cylinder-side contacting surface 14F comes into pressing contact with the shaft-side seating surface 21A of the spacer 21. Accordingly, the cylinder 14 is securely connected or fastened to the rotary shaft 15. In connecting the hub 12 to the cylinder 14, the spline portion 12D of the hub 12 is coupled to the spline portion 14D of the cylinder 14. Then the hub 12 is axially pressed rearward against the cylinder 14, and the joint portion 12C comes into contact with the cap 14C of the cylinder 14. A bolt 22 is inserted from the front side of the hub 12 through the center hole 12E of the hub 12 so as to be screwed into the thread hole 14G of the cylinder 14. Accordingly, the hub 12 is connected to the cylinder 14.

The following will describe the operation of the power transmission device 10 as constructed above.

### [Assembling]

The assembling process includes a process for screwing the cylinder 14 onto the rotary shaft 15 and a further process for connecting the hub 12 to the cylinder 14. At this time, the spacer 21 is in advance press-fitted. Firstly, the cylinder 14 is screwed onto the rotary shaft 15. In this case, the rotary shaft 15 is hold stably such that the periphery of the spacer 21 press-fitted to the rotary shaft 15 is chucked by a tool and the like. Then the internal thread portion 14E of the cylinder 14 is screwed onto the external thread portion 15D of the rotary shaft 15. Thus the cylinder 14 is screwed and is moved rearward along the rotary shaft 15 until the cylinder-side contacting surface 14F comes into pressing contact with the shaft-side seating surface 21A of the spacer 21. Thereby the cylinder 14 is fastened to the rotary shaft 15. A whirl-stopper with a small-diameter is not formed at the front end of the rotary shaft 15. Instead, the spacer 21 as a radially-expanded portion is press-fitted on the rotary shaft 15, and the periphery of the spacer 21 is simply chucked by a tool and the like. Accordingly, the rotary shaft 15 is not easily broken during the fastening process by screwing.

Next, the hub 12 is connected to the cylinder 14. The spline portion 12D of the hub 12 is coupled to the spline portion 14D of the cylinder 14. Then the hub 12 is pressed rearward against the cylinder 14 until the rear end surface of the joint portion 12C of the hub 12 comes into contact with the front end surface of the cap 14C of the cylinder 14. The bolt 22 is inserted from the front side of the hub 12 into the center hole 12E of the hub 12, and is screwed into the thread hole 14G of the cylinder 14. Thereby the hub 12 is connected to the cylinder 14. In this case, a process for chucking a whirl-stopper in screwing is not required in connecting the hub 12. Accordingly, the rotary shaft 15 is not easily broken due to an excessive load during the fastening process by screwing. Further, a whirl-stopper with a small diameter is not formed at the front end of the rotary shaft 15, and thereby the size of the whole device is reduced.

### [Torque Transmission]

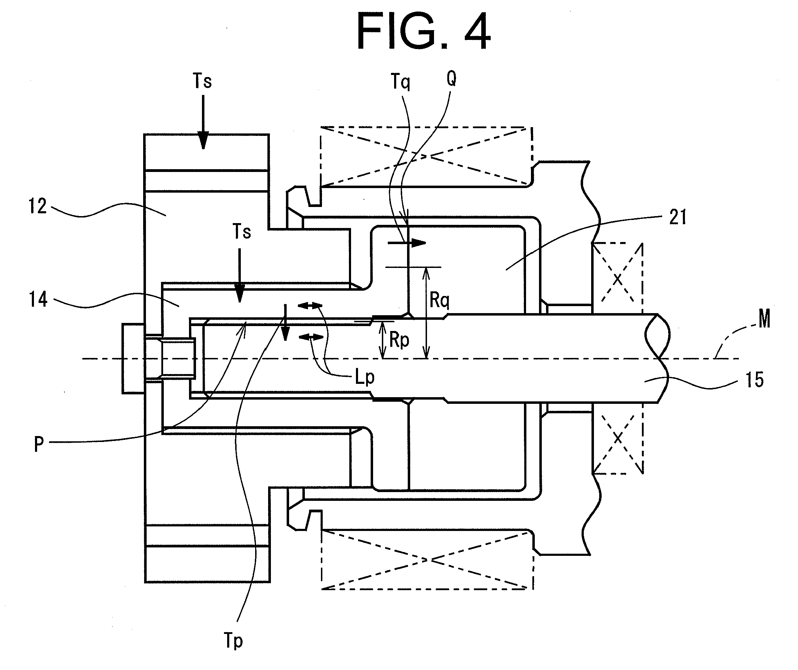

As shown in Fig. 4, P represents a thread engagement portion of the internal thread portion 14E of the cylinder 14 and the external thread portion 15D of the rotary shaft 15. Q represents a contact portion of the cylinder-side contacting surface 14F of the cylinder 14 and the shaft-side seating surface 21A of the spacer 21.

Torque is transmitted from the hub 12 to the cylinder 14, and then from the cylinder 14 to the rotary shaft 15. Torque Ts, or the transmission torque from the pulley 11 to the hub 12, is transmitted simply to the cylinder 14. As shown by arrows in Fig. 4, the torque Ts transmitted to the cylinder 14 is transmitted to the rotary shaft 15 in two different paths. That is, the torque Ts is transmitted from the cylinder 14 to the rotary shaft 15 through the thread engagement portion P and through the contact portion Q, respectively. When Tp represents a torque transmitted through the thread engagement portion P, while Tq represents a torque transmitted through the contact portion Q, an equation Ts=Tp+Tq is satisfied. An axial force is generated in the axial direction in the thread engagement portion P in response to the transmission torque Tp. Lp represents the axial force. The axial force Lp is generated both in the cylinder 14 and the rotary shaft 15. The axial force Lp of the cylinder 14 and the axial force Lp of the rotary shaft 15 are substantially equal in strength.

Transmission torque of a rotary component is proportional to radius of rotation and the like. As shown in Fig. 4, Rp represents the radius of rotation of the thread engagement portion P, and Rq represents the radius of rotation of the contact portion Q, respectively. The radiuses of rotation Rp and Rq correspond to the radial distances from the axis M of the rotary shaft 15 to the thread engagement portion P and the contact portion Q. The radius of rotation Rp is substantially the same as the diameter of the small-diameter portion 15A of the rotary shaft 15. The radius of rotation Rp is set in such a manner that the rotary shaft 15 is not broken due to the axial force Lp generated by the transmission torque Tp when the transmission torque Tp becomes maximum. When the maximum torque is applied on the hub 12, the power shutoff member 13 is operated, and the torque transmission is shut off. The shutoff of the transmission of the torque will be described later.

The radius of rotation Rq is a factor related to the transmission torque Tq at the contact portion Q. When the radius of rotation Rq is decreased and the transmission torque Tq at the contact portion Q is decreased, the transmission torque Tp at the thread engagement portion P is relatively increased according to the equation: Ts=Tp+Tq. Thus, the axial forces Lp are increased. On the other hand, when the radius of rotation Rq is increased and the transmission torque Tq at the contact portion Q is increased, the transmission torque Tp at the thread engagement portion P is relatively decreased according to the equation: Ts=Tp+Tq. Thus, the axial forces Lp are decreased.

In the first embodiment, the cylinder-side contacting surface 14F is formed in the radially-expanded flange 14B, and the contact portion Q is formed such that the cylinder-side contacting surface 14F is in contact with the shaft-side seating surface 21A. Thereby the radius of rotation Rq is increased, and the transmission torque Tq at the contact portion Q is increased. The transmission torque Tp at the thread engagement portion P is decreased relatively, and the axial forces Lp are decreased. Accordingly, it is capable of reducing the breaking strength of the rotary shaft 15, and thereby reducing the diameter of the rotary shaft 15.

### [Shutoff of Excessive Torque]

The shutoff of the transmission of excessive torque will be described. In Fig.2, the power from an engine and the like is transmitted through the pulley 11 to the hub 12. The power shutoff member 13 is disposed in the hub 12. The torque transmitted to the hub 12 is transmitted from the outer-peripheral portion 13A to the inner-peripheral portion 13B through the bridge portions 13D. When the rotary shaft 15 is locked due to a seizure in the compressor, the transmission torque acting on the power shutoff member 13 becomes excessively high. That is, tensile stress applied on the bridge portions 13D between the outer-peripheral portion 13A and the inner-peripheral portion 13B becomes excessively high. Accordingly, due to the excessive stress concentration which is applied on the respective bridge portions 13D, the breakable portions 13E come to be broken as indicated by serrated dot lines in Fig. 2. By the breakage of the respective breakable portions 13E, the power shutoff member 13 is separated into the outer-peripheral portion 13A and the inner-peripheral portion 13B. The transmission of the excessive torque is shut off, accordingly. The transmission of the torque from the pulley 11 is shut off. The belt 18 and other connecting parts between the pulley 11 and the engine are thereby prevented from being broken.

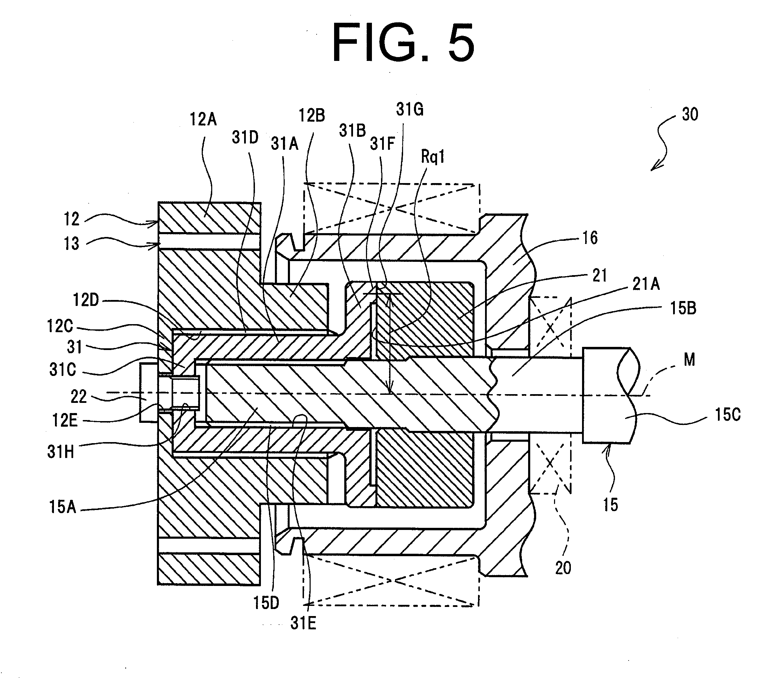

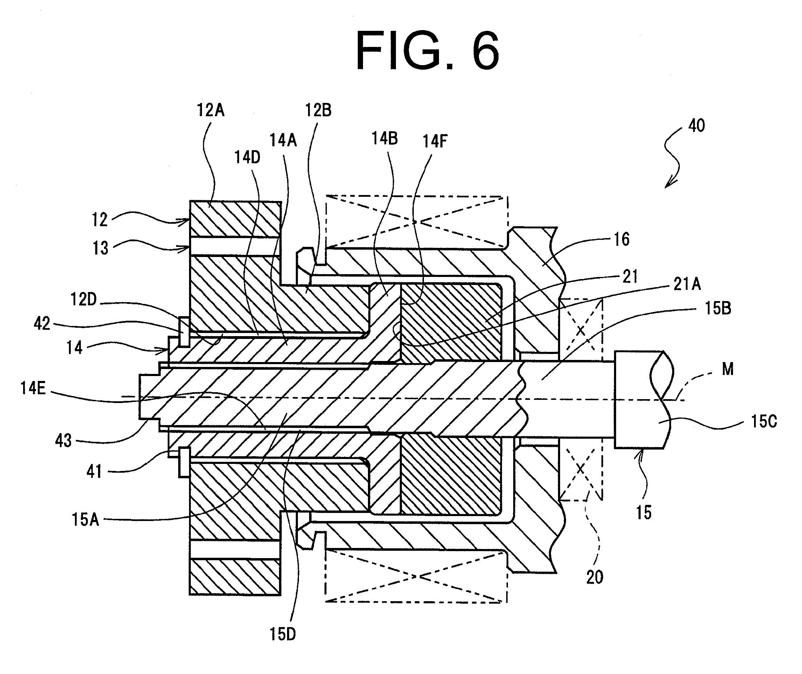

The power transmission device 10 of the first preferred embodiment has the following advantageous effects.
(1) In the assembling process, the spline portion 12D of the hub 12 is coupled to the spline portion 14D of the cylinder 14, and the hub 12 is pressed against the cylinder 14 rearward until the joint portion 12C of the hub 12 contacts the cap 14C of the cylinder 14. Then the bolt 22 is inserted in the center hole 12E of the hub 12 from the front side of the hub 12, and is screwed to the thread hole 14G of the cylinder 14. Accordingly, the hub 12 is connected to the cylinder 14. Thus, the assembling process does not need a process for chucking a whirl-stopper and screwing the hub 12, while such a process is performed in general screw connection. Accordingly, the rotary shaft 15 or the cylinder 14 is not easily broken due to an excessive load during the fastening process by screwing. Further, a whirl-stopper is not formed at the front end of the rotary shaft 15, and thereby the size of the whole power transmission device is reduced.
(2) When the cylinder 14 is screwed onto the rotary shaft 15 during the assembling, the periphery of the spacer 21 press-fitted to the rotary shaft 15 is chucked by a tool and the like so that the rotary shaft 15 is hold stably. Then, the internal thread portion 14E of the cylinder 14 is screwed onto the external thread portion 15D of the rotary shaft 15. Thus, the cylinder 14 is moved along the rotary shaft 15 by screwing until the cylinder-side contacting surface 14F comes into pressing contact with the shaft-side seating surface 21A of the spacer 21. Thereby the cylinder 14 is securely connected to the rotary shaft 15. A whirl-stopper with a small diameter is not formed at the front end of the rotary shaft 15, and the size of the whole power transmission device is reduced. Further, the periphery of the spacer 21 press-fitted on the rotary shaft 15 is simply chucked by a tool and the like. Accordingly, the rotary shaft 15 is not easily broken during the fastening process by screwing.
(3) P represents the thread engagement portion of the internal thread portion 14E of the cylinder 14 and the external thread portion 15D of the rotary shaft 15. Q represents the contact portion of the cylinder-side contacting surface 14F of the cylinder 14 and the shaft-side seating surface 21A of the spacer 21. The cylinder-side contacting surface 14F is formed in the radially-expanded flange 14B. Accordingly, the radius of rotation Rq is increased and the transmission torque Tq at the contact portion Q is increased. Thereby the transmission torque Tp at the thread engagement portion P is decreased relatively, and the axial forces Lp are decreased. Thus, it is capable of reducing the breaking strength of the rotary shaft 15, and thereby reducing the diameter of the rotary shaft 15.
(4) The entire rear end surface of the flange 14B with the enlarged diameter serves as the cylinder-side contacting surface 14F. The area of the contact portion Q of the cylinder-side contacting surface 14F and the shaft-side seating surface 21A is increased. Therefore, the torque Tq transmitted from the cylinder 14 to the rotary shaft 15 through the contact portion Q is transmitted reliably and stably.
(5) The power shutoff member 13 is disposed in the hub 12 so as to shut off the transmission of an excessive torque between the rotary shaft 15 and the pulley 11. When the rotary shaft 15 is locked due to a seizure and the like of the compressor, an excessive stress concentration is applied on the bridge portions 13D of the power shutoff member 13. The breakable portion 13E is broken accordingly, and the excessive torque transmission is shut off. Therefore, the belt 18 and other connecting parts between the pulley 11 and the engine are prevented from being broken.
   The following will describe a second preferred embodiment of the present invention with reference to FIG. 5. The second embodiment differs from the first embodiment in that the shape of the flange 14B of the first embodiment is modified, and the other structures are substantially the same as the first embodiment. For the convenience of explanation, common or similar elements or parts are designated by the same reference numerals as those used in the first embodiment. Therefore, the description thereof is omitted and only the modifications will be described.
   Referring to Fig. 5, a power transmission device 30 of the second preferred embodiment includes a cylinder 31. The cylinder 31 has a cylindrical portion 31A, a flange 31B, and a cap 31C. The flange 31 B is formed adjacent to the rear end of the cylindrical portion 31A so as to radially expand. The cap 31C is formed adjacent to the front end of the cylindrical portion 31A. A protruding portion 31F is formed at the outer periphery of the flange 31B on the rear end of the flange 31B so as to protrude rearward in the axial direction. An internal thread portion 31E is formed at the inner periphery of the cylindrical portion 31A. The internal thread portion 31E is to be screwed onto the external thread portion 15D of the rotary shaft 15. A spline portion 31D is formed at the outer periphery of the cylindrical portion 31A. The spline portion 31 D is coupled to the spline portion 12D of the hub 12. A cylinder-side contacting surface 31 G is formed at the rear end surface of the protruding portion 31F. The cylinder-side contacting surface 31G is in contact with the shaft-side seating surface 21A of the spacer 21 so as to face to each other in the axial direction. The cap 31C is arranged so as to face the front axial end portion of the rotary shaft 15 with a predetermined clearance. The cap 31C has a thread hole 31 H at the center thereof.
   In the second embodiment, the thread engagement portion P is formed by the internal thread portion 31E of the cylinder 31 and the external thread portion 15D of the rotary shaft 15. The contact portion Q is formed by the cylinder-side contacting surface 31G of the cylinder 31 and the shaft-side seating surface 21A of the spacer 21 which is press-fitted on the rotary shaft 15. Rq1 represents the radius of rotation of the contact portion Q. The protruding portion 31F is disposed at the outer periphery of the flange 31B. The cylinder-side contacting surface 31G is formed in the protruding portion 31F. Therefore, the radius of rotation Rq1 is further increased compared to the radius of rotation Rq in the first embodiment. Accordingly, the transmission torque Tq at the contact portion Q is further increased, while the transmission torque Tp at the thread engagement portion P is decreased relatively so as to further decrease the axial forces Lp. Thus, the breaking strength of the rotary shaft 15 is capable of being reduced, thereby further reducing the diameter of the rotary shaft 15.
   According to the power transmission device 30 of the second preferred embodiment, the same advantageous effects as mentioned in the paragraphs (1), (2), and (5) for the first embodiment are obtained. In addition, the following advantageous effect is obtained.
(6) P represents the thread engagement portion of the internal thread portion 31 E of the cylinder 31 and the external thread portion 15D of the rotary shaft 15. Q represents the contact portion of the cylinder-side contacting surface 31G of the cylinder 31 and the shaft-side seating surface 21A of the spacer 21. The cylinder-side contacting surface 31G is formed in the protruding portion 31 F. The protruding portion 31F is disposed at the outer periphery of the radially-expanded flange 31B. Therefore, the radius of rotation Rq1 is further increased compared to the radius of rotation Rq in the first embodiment. Accordingly, the transmission torque Tq at the contact portion Q is further increased, while the transmission torque Tp at the thread engagement portion P is decreased relatively so as to further decrease the axial forces Lp. Thus, the breaking strength of the rotary shaft 15 is capable of being reduced, thereby further reducing the diameter of the rotary shaft 15.
   The following will describe a third preferred embodiment according to the present invention with reference to Fig. 6. The third embodiment differs from the first embodiment in that the structure connecting the hub 12 and the cylinder 14 of the first embodiment is modified. The other structures of the power transmission device is substantially the same as that of the first embodiment. Therefore, common or similar elements or parts are designated by the same reference numerals as those used in the first embodiment and the description thereof is omitted and only the modifications will be described.
   Referring to Fig. 6, a power transmission device 40 of the third preferred embodiment includes the hub 12 without a joint portion. That is, a joint portion for connecting the front end portion of the hub 12 is not formed. The inner periphery of the hub 12 is open at the both front and rear end. A cap on the front end portion of the cylinder 14 is not formed, and the inner periphery of the cylinder 14 is open at the front end. A groove 41 for accommodating a circular clip 42 (a retaining ring) is formed in the circumferential direction at an end portion of the outer periphery of the cylinder 14. A whirl-stopper 43 is formed at the front axial end portion of the rotary shaft 15 so as to protrude frontward. The whirl-stopper 43 is formed of a polygonal shape at the outer periphery thereof. The outer diameter of the whirl-stopper 43 is smaller than that of the small-diameter portion 15A where the external thread portion 15D is formed.
   With the above-described structure, the cylinder 14 is screwed onto the rotary shaft 15, while the whirl-stopper 43 is chucked by a tool and the like so that the rotary shaft 15 is hold stably. Then, the hub 12 is connected to the cylinder 14. That is, the spline portion 12D of the hub 12 is coupled to the spline portion 14D of the cylinder 14. Then, the hub 12 is pressed rearward against the cylinder 14 until the rear end surface of the small-diameter portion 12B of the hub 12 contacts the front end surface of the flange 14B of the cylinder 14. By disposing a circular clip 42 in the groove 41 of the cylinder 14 in order to prevent disengagement, the hub 12 is securely connected to the cylinder 14. The above spline coupling process does not need a chucking process in order to prevent rotation during a fastening process by screwing. Therefore, the rotary shaft 15 or the cylinder 14 is not easily broken during the spline coupling process.
   According to the power transmission device 40 of the third preferred embodiment, the same advantageous effects as mentioned in the paragraphs (3), (4), and (5) for the first embodiment are obtained. In addition, the following advantageous effect is obtained.
(7) The hub 12 is connected to the cylinder 14 in the assembling process. The spline portion 12D of the hub 12 is coupled to the spline portion 14D of the cylinder 14. Then, the hub 12 is pressed rearward against the cylinder 14 until the rear end surface of the small-diameter portion 12B of the hub 12 contacts the front end surface of the flange 14B of the cylinder 14. By disposing the circular clip 42 in the groove 41 of the cylinder 14 in order to prevent disengagement, the hub 12 is securely connected to the cylinder 14. Therefore, the above spline coupling process does not need a chucking process for preventing rotation during a fastening process. The rotary shaft 15 or the cylinder 14 is not easily broken due to an excessive load thereto. There is no need to form a whirl-stopper at the axial end of the cylinder 14. The power transmission devise 40 requires only a space for forming a groove 41 to accommodate the circular clip 42. Therefore the size of the power transmission device 40 is reduced.

The present invention is not limited to the above-described embodiments but may be variously modified within the scope of the invention, as exemplified below.

In the first through third embodiments, the radius of rotation Rq at the contact portion Q is increased by forming the radially-expanded flange. The transmission torque Tp transmitted through the thread engagement portion P may be increased without increasing the radius of rotation Rq.

In the first through third embodiments, the power shutoff member is explained as a torque limiter which is breakable in response to the rotation torque. A torque limiter which is breakable in response to the axial force may be applied.

Therefore, the present examples and embodiments are to be considered as illustrative and not restrictive, and the invention is not to be limited to the details given herein but may be modified within the scope of the appended claims.
A power transmission device of a compressor includes a pulley, a hub, a cylinder, and a spacer. The compressor has a casing and a rotary shaft rotatably supported by the casing and having an external thread portion. The pulley is rotatably mounted on the casing of the compressor. The hub is connected to the pulley for rotation therewith. The cylinder is disposed between the hub and the rotary shaft. The spacer is disposed on the rotary shaft. The cylinder has a contacting surface for contacting a seating surface of the spacer. The cylinder has an internal thread portion at the inner periphery thereof. The internal thread portion of the cylinder is engaged with the external thread portion of the rotary shaft. The cylinder has a spline portion at the outer periphery thereof. The spline portion of the cylinder is coupled to a spline portion of the hub.

## Claims

1. A power transmission device (10, 30, 40) of a compressor for transmitting torque to the compressor, wherein the compressor has a casing (16) and a rotary shaft (15) rotatably supported by the casing (16) and having an external thread portion (15D), the power transmission device (10, 30, 40) comprising:
a pulley (11) rotatably mounted on the casing (16) of the compressor;
a hub (12) connected to the pulley (11) for rotation therewith;
a cylinder (14, 31) disposed between the hub (12) and the rotary shaft (15), and
a spacer (21) disposed on the rotary shaft (15);
**characterized in that**
the cylinder (14, 31) has a contacting surface (14F, 31 G) for contacting a seating surface (21A) of the spacer (21),
wherein the cylinder (14, 31) has an internal thread portion (14E, 31E) at the inner periphery thereof, and the internal thread portion (14E, 31E) of the cylinder (14, 31) is engaged with the external thread portion (15D) of the rotary shaft (15),
wherein the cylinder (14, 31) has a spline portion (14D, 31D) at an outer periphery thereof, and the hub (12) has a spline portion (12D) at the inner periphery thereof, wherein the spline portion (14D, 31D) of the cylinder (14, 31) is coupled to the spline portion (12D) of the hub (12).

2. The power transmission device (10, 30, 40) of the compressor according to claim 1, **characterized in that** a power shutoff member (13) is disposed in the hub (12), **in that** the power shutoff member (13) shuts off excessive torque transmission between the pulley (11) and the rotary shaft (15).

3. The power transmission device (10, 30, 40) of the compressor according to claim 1 or 2, **characterized in that** the contacting surface (14F, 31G) of the cylinder (14, 31) is formed as a flange (14B, 31B) which is radially expanded from a cylindrical portion (14A, 31A) of the cylinder (14, 31).

4. The power transmission device (30) of the compressor according to claim 3, **characterized in that** a protruding portion (31F) including the contacting surface (31G) is formed at the outer periphery of the flange (31B).

5. The power transmission device (10, 30) of the compressor according to any one of claims 1 through 4, **characterized in that** the hub (12) is connected to the cylinder (14) by way of a bolt (22) screwed into the cylinder (14).

6. The power transmission device (40) of the compressor according to any one of claims 1 through 4, **characterized in that** the hub (12) is connected to the cylinder (14) by a circular clip (42).
